# EUROPEAN PATENT APPLICATION

(11) **EP 2 253 217 A2**
(43) Date of publication of application: **24.11.2010**
(21) Application number: 10163346.9
(22) Date of filing: 19.05.2010
(51) Int. Cl.: A21D 2/18, A21D 13/04, A21D 13/00, A23L 1/16

(54) **Dough composition for frying comprising water-soluble cellulose ether**

(30) Priority: 19.05.2009 JP 2009120942
(71) Applicant: Shin-Etsu Chemical Co., Ltd., Chiyoda-ku, Tokyo (JP)
(72) Inventor: Fukasawa, Miyuki, Chiyoda-ku Tokyo (JP); Hayakawa, Kazuhisa, Joestsu-shi Niigata (JP); Kuribayashi, Daisuke, Sakai-shi Osaka (JP)
(74) Representative: Jones, Helen M.M.

(57) **Abstract**

Provided is a method of producing a dough composition for frying which absorbs a reduced amount of oil, and has an excellent texture. Specifically, provided are: a dough composition for frying comprising at least cereal crop powder and an aqueous solution of water-soluble cellulose ether which is gelable during heating; and a fried dough composition obtained by frying the dough composition. Moreover, provided is a method of producing a fried dough composition, the method comprising at least the steps of:
mixing an aqueous solution of water-soluble cellulose ether which is gelable during heating with cereal crop powder to form a dough composition; and frying the dough composition.

## Description

### Background of the Invention

### 1. Field of the Invention

The present invention relates to a dough composition for frying which absorbs a reduced amount of oil and is used for doughnuts, fried bread, fried noodles and the like, and relates also to a method of producing a fried dough composition.

### 2. Description of the Related Art

A fried food is a general name for a food which is fried (deep-fried in oil), and includes a food which is battered and fried, such as a croquette, or KARAAGE (a Japanese deep-fried food such as deep-fried chicken or fish), as well as a food which is produced by kneading dough ingredients (dough composition) such as wheat flour, shaping the dough composition, and frying the shaped dough composition. Examples of the latter food include a doughnut, fried bread (containing one or more filling ingredients such as curry or sausage), a fried noodle which is obtained by frying a noodle shaped dough composition, and the like.

The structure of the fried dough composition is converted into a sponge-like structure during frying because of the expansion of the dough. As a result, the fried dough composition contains a large amount of frying oil absorbed. Recently, it is revealed that the ingestion of too much oil may lead to obesity, accumulation of fats, blood diseases and the like, and harmful effects of such ingestion of too much oil have been emphasized. Under such circumstances, there has been a growing trend to reduce ingestion of fats and fatty oils in daily dietary habits.

In this connection, there have been tried fried dough compositions such as doughnuts and fried noodles whose oil contents are reduced as much as possible.

Under these circumstances, several methods are proposed for reducing oil absorption of a fried dough composition.

For example, Japanese Patent Application Publication No. 2001-333691 proposes a method of reducing the oil absorption by use of a baking powder. Meanwhile, Japanese Patent Application Publication No. 2000-236821 proposes an oil absorption inhibitor containing alginic acid ester, and the like. However, both the methods have problems in texture retention and oil absorption reduction ability, and are unsatisfactory from the practical viewpoint.

Meanwhile, Japanese Patent Application Publication No. 11-56217 discloses a method in which a polysaccharide thickener is used for a wheat flour product such as a doughnut. However, the object of the method is to provide a product with a soft texture. Accordingly, this document suggests nothing about oil absorption reduction, and makes no reference to methyl cellulose and hydroxypropyl methyl cellulose.

Japanese Patent Application Publication No. 2005-218409 discloses a method of producing a dough composition using methyl cellulose or hydroxypropyl methyl cellulose. In this method, cereal crop powder and methyl cellulose or hydroxypropyl methyl cellulose are mixed with each other in a powdery state, and then water is added thereto.

Similarly, Journal of Food Science 58(1), pp. 204 to 205 and 222 discloses an oil absorption suppression effect achieved by adding hydroxypropyl methyl cellulose to dough for a doughnut. In this production method, cereal crop powder and hydroxypropyl methyl cellulose are mixed with each other in a powdery state, and then water is added thereto, as similar to the above described method.

In Food Hydrocolloids 22(2008), pp. 1062 to 1067, a method is examined in which oil absorption is suppressed by adding methyl cellulose to batter for a food product.

### Summary of the Invention

The present inventors have found that when a dough composition obtained by mixing cereal crop powder and cellulose ether with each other in a powdery state and adding water thereto is fried, as described in Japanese Patent Application Publication No. 2005-218409 and Journal of Food Science 58(1), pp. 204 to 205 and 222, the fried dough composition has a problem of oil absorption reduction ability. It is difficult to form an aqueous solution of water-soluble cellulose ether because of its insufficient solubility. Accordingly, when the water-soluble cellulose ether does not dissolve sufficiently, a larger amount of the water-soluble cellulose ether has to be added to obtain a predetermined oil absorption suppression effect. Thus, it is conceivable that an undissolved part of the water-soluble cellulose ether gives a hard texture.

Moreover, when a batter is used for the fried food product, 100 to 120 parts by weight of water is added to 100 parts by weight of cereal crop powder as described in Food Hydrocolloids 22(2008), pp. 1062 to 1067. Accordingly, it is conceivable that even by the method in which water is added after the mixing in a powdery state, methyl cellulose is sufficiently dissolved, displaying an oil absorption suppression function. However, when a dough composition is used for the fried food product, water content in a dough composition for frying is typically as low as 30 to 50% by weight. Accordingly, it is predictable that, by a method in which water is added to a powder mixture, the water-soluble cellulose ether in the dough composition does not dissolve sufficiently, thereby failing to provide a sufficient oil absorption reduction effect.

An object of the present invention is to overcome the above-described problems involved in producing a fried dough composition, and to provide a method of producing a dough composition which absorbs a reduced amount of oil and which has an excellent texture.

The inventors have made earnest study in order to solve the above problems, and have found the following fact. Specifically, when a dough composition for frying is produced by adding, to cereal crop powder, an aqueous solution of water-soluble cellulose ether which is gelable during heating, and is then fried, the fried dough composition absorbs a greatly reduced amount of oil. This finding leads to the completion of the present invention.

The present invention provides a dough composition for frying comprising at least cereal crop powder and an aqueous solution of water-soluble cellulose ether which is gelable during heating; and a fried dough composition obtained by frying the dough composition. Moreover, the present invention provides a method of producing a fried dough composition comprising at least the steps of: mixing an aqueous solution of water-soluble cellulose ether which is gelable during heating with cereal crop powder to form a dough composition; and frying the obtained dough composition.

A fried dough composition obtained by frying the dough composition for frying of the present invention absorbs a reduced amount of oil, and provides an excellent texture similar to an intrinsic one.

### Detailed Description of the Preferred Embodiment

An aqueous solution of water-soluble cellulose ether used in the present invention shows a property of reversible thermal gelation in which the solution becomes white turbid and gelled upon heating, but returns to the original transparent aqueous solution state upon cooling. For utilizing this property, such an aqueous solution is added to many food products for the purpose of improving thermal resistance of fillings or preventing puncture of croquettes. During heating, the water-soluble cellulose ether causes the food products to be gelled, thereby preventing water vaporization and improving shape retention properties. Meanwhile, in a temperature range where the food products are eaten, the gel structure disappears. Accordingly, the water-soluble cellulose ether has a characteristic of providing a softer and creamier texture than that provided by irreversible gelatinizing agents.

Similarly, when the water-soluble cellulose ether is added to a dough composition and then fried, the following is conceivable. Specifically, the water-soluble cellulose ether causes the dough composition to be gelled instantaneously, thereby inhibiting the substitution with oil due to vaporization of water in the dough. As a result, the effect of reducing oil absorption can be obtained. Moreover, the following is also conceivable. Specifically, an aqueous solution of the water-soluble cellulose ether is prepared and then added to the dough composition. Hence the water-soluble cellulose ether is sufficiently hydrated or dissolved so that water retention capability of the dough is improved. As a result, such a method provides a greater oil absorption reduction effect than a method in which the water-soluble cellulose ether and cereal crop powder are mixed with each other in a powdery form, kneaded with water, and then fried.

As the water-soluble cellulose ether used in the present invention, water-soluble cellulose ether obtained by etherifying cellulose can be used. Although any type of such water-soluble cellulose ether can be used, preferably used is methyl cellulose having methyl groups, or hydroxyalkyl alkyl cellulose in which a small amount of hydroxyalkyl groups such as hydroxypropyl groups or hydroxyethyl groups are introduced by substitution, in addition to methyl groups or ethyl groups.

As the methyl cellulose, preferably used is water-soluble methyl cellulose (gelation temperature: 50°C, dissolution temperature: 20°C) having a degree of methoxyl substitution of approximately 19 to 32% by weight. Meanwhile, as the hydroxyalkyl alkyl cellulose, preferably used is hydroxypropyl methyl cellulose (gelation temperature: 70 to 80°C, dissolution temperature: 30 to 40°C) having a degree of methoxyl substitution of 19 to 32% by weight and a degree of hydroxypropoxyl substitution of 4 to 12% by weight, hydroxyethyl methyl cellulose (gelation temperature: 70 to 80°C, dissolution temperature: 35 to 55°C) having a degree of methoxyl substitution of 19 to 32% by weight and a degree of hydroxyethyoxyl substitution of 4 to 12% by weight, or hydroxyethyl ethyl cellulose (gelation temperature: 63°C, dissolution temperature: 60°C) having a degree of ethyoxyl substitution of 5 to 20% by weight and a degree of hydroxyethyoxyl substitution of 4 to 60% by weight. These can be used alone or as a mixture of two or more.

Note that these degrees of substitution can be determined in accordance with the Zeisel-GC method described in J. G. Gobler, E. P. Samsel and G. H. Beaber, Talanta, 9, 474 (1962). Moreover, these degrees can also be determined by a measurement method using gas chromatography as described in "methyl cellulose" of Japanese Standards of Food Additives, or a method in accordance with the measurement method of a degree of substitution of methyl cellulose and hydroxypropyl methyl cellulose specified in the Japanese Pharmacopoeia.

The molecular weight of the water-soluble cellulose ether of the present invention can be any value as long as the molecular weight is large enough to allow an aqueous solution of the water-soluble cellulose ether to be thermally gelled upon heating, and to allow the gel to return to the aqueous solution upon cooling as described above. The measurement of such a molecular weight can be performed as described in J. Polym. Sci., 39, 293-298, 1982, by employing a viscosity in a 2% by weight aqueous solution at 20°C which correlates with the molecular weight. As this viscosity, a viscosity value of a 2% by weight aqueous solution at 20°C measured with an Ubbelohde viscosimeter specified in JIS K2283-1993 can be used. For the purpose of improving water retention capability and displaying a function expected by the present invention in a smaller added amount, the viscosity of the water-soluble cellulose ether of the present invention may be preferably 15 mPa•s or more, and further preferably approximately 100 to 100,000 mPa•s.

The concentration of the aqueous solution of the water-soluble cellulose ether may be preferably 1.0 to 2.5% by weight, and particularly preferably 1.3 to 2.1% by weight. The water content in the dough composition for frying may be preferably 30 to 50% by weight. The total content of the water-soluble cellulose ether in the dough composition for frying may be preferably 0.1 to 5% by weight, particularly preferably 0.1 to 2% by weight. When the content is less than 0.1% by weight, a sufficient oil absorption suppression effect may not be obtained. When the content is more than 5% by weight, too high viscosity of the water-soluble cellulose ether may be given to food ingredients so that original texture may be changed.

A method for producing the aqueous solution of the water-soluble cellulose ether may not be particularly limited. As a dissolution method, a hot water dispersion method has been known. Specifically, in the hot water dispersion method, an aqueous solution having a predetermined concentration is obtained by sufficiently dispersing a powder of the water-soluble cellulose ether in an entirety or a part of a predetermined amount of hot water to form slurry, and then cooling the slurry as it is or after water is added.

The dough composition for frying of the present invention may further comprise a thickener. The thickener may include starch, xanthan gum, guar gum, locust bean gum, gellan gum, tamarind seed gum, psyllium seed gum, gum Arabic, carrageenan, alginic acid and salts thereof, pullulan, glucomannan, pectin, gelatin, agar, modified starch, carboxy methyl cellulose and soybean polysaccharides. The dough composition may comprise preferably 0 to 10% by weight, particularly 0 to 2% by weight of the thickener in total. Note that the thickener is distinguished from polysaccharides which are gelable during heating because the thickener is not gelled during heating.

Note that, in a fried dough composition of the present invention, cereal crop powder may be used as a main ingredient, to which, for example, sugar, common salt, oil and fat, baking powder, a dairy product and water may be added. If necessary, the other well-known sub-ingredient may be further blended with the cereal crop powder. The cereal crop powder is a powder of a grain, and examples of the grain may include rice, barley, wheat, oat, foxtail millet, Japanese barnyard millet, proso millet, maize (corn) and beans.

The main ingredient and sub-ingredient may not be particularly limited as long as the object of the present invention is not impaired.

A method for producing a fried dough composition comprises at least the steps of: mixing an aqueous solution of the water-soluble cellulose ether with the cereal crop powder to form a dough composition for frying; and frying the obtained dough composition for frying.

A step of mixing the aqueous solution of the water-soluble cellulose ether with the cereal crop powder for obtaining the dough composition for frying may not be particularly limited. The aqueous solution and the cereal crop powder may be mixed with each other preferably as uniformly as possible, and may be kneaded with each other.

The frying may include deep-frying in oil at a temperature above the gelation temperature of the water-soluble cellulose ether. The method for frying the obtained dough composition for frying may not be particularly limited. For example, temperature, duration and the like of the frying in oil can be selected in accordance with properties of a food to be fried.

The fried dough composition may preferably include, but not particularly limited to, a doughnut, fried bread or a fried noodle.

### Examples

Hereinafter, the present invention will be described specifically with reference to Examples and Comparative Examples. However, it should not be construed that the present invention is limited to Examples below.

### (Example 1)

The 2.0 g of methyl cellulose (manufactured by Shin-Etsu Chemical Co., Ltd.) having methoxy group content of 29% by weight and a viscosity of 4000 mPa•s which was determined with an Ubbelohde viscosimeter in a 2.0% by weight aqueous solution at 20°C as specified in JIS K2283-1993 was dispersed in 98 g of hot water. This slurry was cooled to 20°C to form a 2.0% by weight aqueous solution of methyl cellulose.

The 26.67 g of granulated sugar was added to a mixture of 10 g of the 2.0% by weight aqueous solution of methyl cellulose and 8 g of beaten whole egg, and well stirred to form a mixture solution (A). Fifty grams of weak wheat flour, 2.67 g of pregelatinized starch (alpha starch) (manufactured by SHIKISHIMA STARCH MFG. CO., LTD.) and 1.0g of baking powder were well mixed with each other in a powder state. To the mixture, a whole amount of the above-described mixture solution (A) was added, and the resulting mixture was sufficiently kneaded until a uniform dough was obtained. To this dough, 1.67 g of melted butter was added, and sufficiently kneaded together to uniformity. Thus, 100 g of a dough composition for frying was obtained.

This dough composition for frying was shaped into rings (20 g/ring), and fried for two minutes in salad oil heated at 170°C. The dough composition was overturned, and fried for another 2 minutes. Thus, doughnuts comprising methyl cellulose were obtained.

### (Example 2)

The 2.0 g of hydroxypropyl methyl cellulose (manufactured by Shin-Etsu Chemical Co., Ltd.) having methoxy group content of 22% by weight, hydroxypropyl group content of 9% by weight, and a viscosity of 4000 mPa•s which was determined with an Ubbelohde viscosimeter in a 2.0% by weight aqueous solution at 20°C as specified in JIS K2283-1993 was dispersed in 98 g of hot water. This slurry was cooled to 20°C to form a 2.0% by weight aqueous solution of hydroxypropyl methyl cellulose.

By using 10 g of this 2.0% by weight aqueous solution of hydroxypropyl methyl cellulose, doughnuts comprising hydroxypropyl methyl cellulose were obtained in the same manner as in Example 1.

### (Comparative Example 1)

Doughnuts were produced in the same manner as in Examples 1 and 2 except that neither methyl cellulose nor hydroxypropyl methyl cellulose was added to a dough composition.

### (Comparative Example 2)

The 0.35 g of methyl cellulose (manufactured by Shin-Etsu Chemical Co., Ltd.), 49.65 g of weak wheat flour, 2.67 g of pregelatinized starch (manufactured by SHIKISHIMA STARCH MFG. CO., LTD.) and 1.0 g of baking powder were well mixed in a powdery state. Here, the methyl cellulose had methoxy group content of 29% by weight and a viscosity of 4000 mPa•s which was determined with an Ubbelohde viscosimeter in a 2.0% by weight aqueous solution at 20°C as specified in JIS K2283-1993. The 10 g of water was added to this mixture and was sufficiently kneaded until uniform dough was obtained. The 1.67 g of melted butter was further added to this dough and sufficiently kneaded together to uniformity. Thus, 100 g of a dough composition for frying was obtained.

This dough composition for frying was shaped into rings (20 g/ring), and fried for two minutes in salad oil heated at 170°C. The dough composition was overturned, and fried for another 2 minutes. Thus doughnuts comprising methyl cellulose were obtained.

The water content of each of the doughnuts was determined by a normal pressure heat drying method, and the amount of oil absorption thereof was determined by an acid decomposition method. Textures were also evaluated. The results are shown in Table 1.

**Table 1**

| | amount of Methyl cellulose or hydroxypropyl methyl cellulose in the dough (wt%) | way of adding cellulose ether | water content measured after frying (wt%) | oil and fat Content Measured After Frying (wt%) | texture |
|---|---|---|---|---|---|
| Example 1 | 0. 2 | addition of aqueous solution | 14. 3 | 16. 9 | same texture and flavor as the standard |
| Example 2 | 0. 2 | addition of aqueous solution | 11.8 | 19.8 | same texture and flavor as the standard |
| Comp. Ex. 1 | 0 | - | 10. 5 | 24. 9 | the standard |
| Comp. Ex. 2 | 0. 35 | addition of powder | 9. 5 | 24. 5 | same texture and flavor as the standard |

The doughnuts obtained in Example 1 in which the aqueous solution of methyl cellulose was mixed had same textures and tastes to those of the doughnuts of Comparative Example 1 in which no methyl cellulose was added and the doughnuts of Comparative Example 2 in which the methyl cellulose powder was mixed. Moreover, the doughnuts obtained in Example 1 reduced the oil and fat content determined after the frying by slightly more than 30% in comparison with those in Comparative Examples 1 and 2. The doughnuts obtained in Example 2 in which the aqueous solution of hydroxypropyl methyl cellulose was mixed also reduced the oil and fat content determined after the frying in comparison with those in Comparative Examples 1 and 2.

### (Example 3)

The 1.5g of methyl cellulose (manufactured by Shin-Etsu Chemical Co., Ltd.) having methoxy group content of 29% by weight, and a viscosity of 4000 mPa•s which was determined with an Ubbelohde viscosimeter in a 2.0% by weight aqueous solution at 20°C as specified in JIS K2283-1993 was dispersed in an 98.5 g of hot water. This slurry was cooled to 20°C to form a 1.5% by weight aqueous solution of methyl cellulose.

A mixture of 1.05 g of common salt, 0.13 g of KANSUI {powder, a mixture of sodium carbonate (anhydrous) and potassium carbonate (anhydrous)}, 20.82 g of the above-described 1.5% by weight aqueous solution of methyl cellulose was added to 65 g of all-purpose flour and 13 g of pregelatinized starch (manufactured by SHIKISHIMA STARCH MFG. CO., LTD.), and mixed to uniformity. Thus, a dough composition for frying comprising 0.3% by weight of methyl cellulose was obtained.

This dough was shaped into noodles having a diameter of 2 mm with a noodle machine. The noodles were subjected to a steam heating process and then fried in palm oil heated at 170°C for 3 minutes. Thus, fried Chinese noodles comprising methyl cellulose was obtained.

### (Example 4)

The 1.0 g of hydroxypropyl methyl cellulose (manufactured by Shin-Etsu Chemical Co., Ltd.) having methoxy group content of 29% by weight, hydroxypropyl group content of 6% by weight, and a viscosity of 25000 mPa•s which was determined with an Ubbelohde viscosimeter in a 2.0% by weight aqueous solution at 20°C as specified in JIS K2283-1993 was dispersed in 99g of hot water. This slurry was cooled to 20°C to form a 1.0% by weight aqueous solution of hydroxypropyl methyl cellulose.

A mixture of 1.05 g of common salt, 0.13 g of KANSUI {powder, a mixture of sodium carbonate (anhydrous) and potassium carbonate (anhydrous)}, 20.82 g of the above-described 1% by weight aqueous solution of hydroxypropyl methyl cellulose was added to 65 g of all-purpose flour and 13 g of pregelatinized starch (manufactured by SHIKISHIMA STARCH MFG. CO., LTD.), and mixed to uniformity. Thus, a dough composition for frying comprising 0.2% by weight of hydroxypropyl methyl cellulose was obtained.

This dough composition for frying was shaped into noodles having a diameter of 2 mm with a noodle machine. The noodles were subjected to a steam heating process and then fried in palm oil heated at 170°C for 3 minutes. Thus, fried Chinese noodles comprising hydroxypropyl methyl cellulose was obtained.

### (Comparative Example 3)

Fried Chinese noodles were produced in the same manner as in Examples 3 and 4 except that neither methyl cellulose nor hydroxypropyl methyl cellulose was added to a dough composition.

### (Comparative Example 4)

The 0.3 g of methyl cellulose (manufactured by Shin-Etsu Chemical Co., Ltd.), 65 g of all-purpose flour, 13 g of pregelatinized starch (manufactured by SHIKISHIMA STARCH MFG. CO., LTD.), 1.05 g of common salt and 0.13 g of KANSUI {powder, a mixture of sodium carbonate (anhydrous) and potassium carbonate (anhydrous)} were mixed in a powdery state. Here, the methyl cellulose had methoxy group content of 29% by weight, and a viscosity of 4000 mPa•s which was determined with an Ubbelohde viscosimeter in a 2.0% by weight aqueous solution at 20°C as specified in JIS K2283-1993. The 20.52 g of water was added to this mixture and mixed to uniformity. Thus, a dough composition for frying comprising 0.3% by weight of methyl cellulose was obtained.

This dough was shaped into noodles having a diameter of 2 mm with a noodle machine. The noodles were subjected to a steam heating process and then fried in palm oil heated at 170°C for 3 minutes. Thus, fried Chinese noodles comprising methyl cellulose were obtained.

The water content of each of the Chinese noodles was determined by the normal pressure heat drying method, and the amount of oil absorption thereof was determined by the acid decomposition method. Textures were also evaluated. The results are shown in Table 2.

**Table 2**

| | amount of methyl cellulose or hydroxypropyl methyl cellulose in the dough (wt%) | way of adding cellulose ether | water content measured after frying (wt%) | oil and fat Content Measured After Frying (wt%) | texture |
|---|---|---|---|---|---|
| Example 3 | 0. 3 | addition of aqueous solution | 5. 0 | 14. 2 | same texture and flavor as the standard |
| Example 4 | 0. 2 | addition of aqueous solution | 4. 9 | 15. 7 | same texture and flavor as the standard |
| Comp. Ex. 3 | 0 | | 4. 5 | 20. 5 | the standard |
| Comp. Ex. 4 | 0. 3 | addition of powder | 4.7 | 20. 1 | same texture and flavor as the standard |

The fried Chinese noodles obtained in Example 3 in which the aqueous solution of methyl cellulose was mixed had same texture and flavor as those of the fried Chinese noodles of Comparative Example 3 in which no methyl cellulose was added and the fried Chinese noodles of Comparative Example 4 in which the methyl cellulose powder was mixed. Moreover, the fried Chinese noodles obtained in Example 3 reduced oil and fat content determined after the frying by 30% in comparison with those in Comparative Examples 3 and 4. The fried Chinese noodles obtained in Example 4 in which the aqueous solution of hydroxypropyl methyl cellulose was mixed reduced oil and fat content determined after frying in comparison with those in Comparative Examples 3 and 4.

## Claims

1. A dough composition for frying comprising at least:
an aqueous solution of water-soluble cellulose ether which is gelable during heating, and
cereal crop powder.

2. The dough composition for frying according to claim 1, wherein said water-soluble cellulose ether which is gelable during heating is selected from the group consisting of methyl cellulose, hydroxypropyl methyl cellulose, hydroxyethyl methyl cellulose and hydroxyethyl ethyl cellulose.

3. The dough composition for frying according to any preceding claim, wherein the water-soluble cellulose ether is methyl cellulose having a degree of methoxyl substitution of 19 to 32% by weight, as determined by the Zeisel-GC method or gas chromatography.

4. The dough composition for frying according to claim 1 or 2,
wherein the water-soluble cellulose ether is hydroxypropyl methyl cellulose having a degree of methoxyl substitution of 19 to 32% by weight and a degree of hydroxypropoxyl substitution of 4 to 12% by weight, as determined by the Zeisel-GC method or gas chromatography.

5. The dough composition for frying according to claim 1 or 2,
wherein the water-soluble cellulose ether is hydroxyethyl methyl cellulose having a degree of methoxyl substitution of 19 to 32% by weight, and a degree of hydroxyethoxyl substitution of 4 to 12% by weight, as determined by the Zeisel-GC method or gas chromatography.

6. The dough composition for frying according to claim 1 or 2,
wherein the water-soluble cellulose ether is hydroxyethyl ethyl cellulose having a degree of ethoxyl substitution of 5 to 20% by weight, and a degree of hydroxyethoxyl substitution of 4 to 60% by weight, as determined by the Zeisel-GC method or gas chromatography.

7. The dough composition for frying according to any preceding claim, wherein the concentration of the aqueous solution of the water-soluble cellulose ether is 1.0 to 2.5% by weight.

8. The dough composition for frying according to any preceding claim, wherein the water content in the dough composition is 30 to 50% by weight.

9. The dough composition for frying according to any preceding claim, wherein the total content of the water-soluble cellulose ether in the dough composition is 0.1 to 5% by weight.

10. The dough composition for frying according to any preceding claim, wherein said cereal crop powder is the powder of the at least one grain selected from the group consisting of rice, barley, wheat, oat, foxtail millet, Japanese barnyard millet, proso millet, maize (corn) and beans.

11. The dough composition for frying according to any preceding claim, further comprising a thickener, present in an amount of 0 to 10% by weight, wherein the thickener is preferably at least one selected from the group consisting of starch, xanthan gum, guar gum, locust bean gum, gellan gum, tamarind seed gum, psyllium seed gum, gum Arabic, carrageenan, alginic acid and salts thereof, pullulan, glucomannan, pectin, gelatin, agar, modified starch, carboxy methyl cellulose and soybean polysaccharides.

12. A fried dough composition obtained by frying the dough composition according to any preceding claim.

13. The fried dough composition according to claim 12, which is any one of a doughnut, fried bread and a fried noodle.

14. A method of producing a fried dough composition comprising the step of:
frying the dough composition according to claims 1 to 11.

15. The method of producing a fried dough composition according to claim 14, further comprising the preliminary step of mixing the aqueous solution of water-soluble cellulose ether which is gelable during heating with cereal crop powder to form a dough composition.
